# EUROPÄISCHE PATENTSCHRIFT

(11) **EP 3 255 324 B1**
(45) Veröffentlichungstag und Bekanntmachung des Hinweises auf die Patenterteilung: **27.03.2019**
(21) Anmeldenummer: 17155102.1
(22) Anmeldetag: 08.02.2017
(51) Int. Cl.: F16K 1/44

(54) **KONDENSATABLEITER, ASEPTISCHES DOPPELSITZVENTIL, VERFAHREN ZUM BETREIBEN DES KONDENSATABLEITERS, UND ABFÜLLANLAGE**
STEAM TRAP, ASEPTIC DOUBLE-SEAT VALVE, METHOD FOR OPERATING THE STEAM TRAP, AND AN EMPTYING INSTALLATION
SÉPARATEUR DE VAPEUR, ROBINET ASEPTIQUE À DOUBLE SIÈGE, PROCÉDÉ DE FONCTIONNEMENT DU SÉPARATEUR DE VAPEUR ET INSTALLATION DE SOUTIRAGE

(30) Priorität: 03.03.2016 DE 102016203557
(43) Veröffentlichungstag der Anmeldung: 13.12.2017
(73) Patentinhaber: Evoguard GmbH, 93149 Nittenau (DE)
(72) Erfinder: Sauer, Martin, 93149 Nittenau (DE)
(74) Vertreter: Grünecker Patent- und Rechtsanwälte PartG mbB

(56) Entgegenhaltungen:
- EP-A1- 0 545 846
- DE-A1-102011 050 955
- US-A1- 2007 151 611
- US-A1- 2015 211 642

## Beschreibung

Die Erfindung betrifft einen Kondensatableiter gemäß Oberbegriff des Anspruchs 1, ein aseptisches Doppelsitzventil gemäß Oberbegriff des Anspruchs 13, ein Verfahren gemäß Anspruch 18 und eine Abfüllanlage gemäß Anspruch 19.

In einem aus WO 2012/168221 A2 und DE 10 2011 050 955A1 bekannten Kondensatableiter eines Doppelsitzventils weist der Schließkörper anschließend an die konische Dichtfläche einen zylindrischen Fortsatz auf, der sowohl in der Offenstellung als auch in der Schließstellung in eine hohlzylindrische Verlängerung des Sitzes eingreift und darin einen kreisringförmigen Durchgang begrenzt. Die Größe des Durchgangs bleibt bei Verstellungen des Schließorgans unverändert und begrenzt eine vorbestimmte Strömungsrate. Das Schließorgan ist bis in vollen Absperr-Kontakt mit dem Sitz verstellbar. In der Offenstellung des Sitzventils wird das Reinigungsmedium abgeführt. In der Schließstellung wird der Dampfdruck gehalten, bis das Sitzventil jeweils temperaturabhängig in die Offenstellung gestellt wird, um entstehendes Kondensat abzulassen. Der Kondensatableiter ist an ein unteres Absperrventil einer Ventilkammer eines Doppelsitzventils angeschlossen, die mit sterilem Dampf gereinigt und sterilisiert wird, wobei aus der Dampfbeaufschlagung resultierendes Kondensat in der Offenstellung des Sitzventils abgeführt wird, das temperaturabhängig in der vollständig abdichtenden Schließstellung gehalten wird, solange kein Kondensat ansteht.

In einem aus WO 2015/039724 A1 bekannten Kondensatableiter, der an eine von einer Rohrleitungsanordnung einer Prozessanlage abzweigende Kondensatleitung angeschlossen ist, ist das in Abführrichtung stromauf des Sitzes angeordnete Schließorgan durch ein thermodynamisches Stellglied und/oder eine pneumatische Betätigungseinrichtung relativ zum Sitz zwischen einer abdichtenden Schließstellung, einer drosselnden Teilschließstellung und einer vollen Offenstellung verstellbar.

DE 4036581 A1 offenbart einen Kondensatableiter, der über ein Umschaltventil an das Ablassventil eines Doppelsitzventils angeschlossen wird. Das Umschaltventil öffnet beim Spülzyklus einen großquerschnittigen Weg zum Ablauf, während der Kondensatableiter isoliert wird.

Aus US 5628339 A ist ein Kondensatableiter bekannt, der an eine Heißwasser-Boiler-Dampfleitung angeschlossen ist und in einem Ventil-Schraubeinsatz einen Durchgang enthält.

Aus DE 1711575 U1 ist ein Kondensatableiter für Dampfheizungen bekannt, in welchem ein Schließorgan mit kegelstumpfförmiger oder kreiszylindrischer Gestalt im Mantel Nuten enthält, die in Abführrichtung konstante Querschnitte ohne Düseneffekt definieren.

Von Interesse sind ferner US 2007/15 1611 A1, EP 0 545 846 A1, US 2015 211 642 A1.

Der Erfindung liegt die Aufgabe zugrunde, einen Kondensatableiter, ein aseptisches Doppelsitzventil ein Verfahren zum Betreiben des Kondensatableiters und eine Abfüllanlage anzugeben, die funktionssicher, kostengünstig und wartungsarm sind, wobei der Kondensatableiter aus möglichst wenigen Teilen bestehen soll und den baulichen Aufwand in einem aseptischen Doppelsitzventil verringern lässt.

Die gestellte Aufgabe wird mit den Merkmalen des Anspruchs 1, des Anspruchs 13, des Anspruchs 18 und des Anspruchs 19 gelöst.

In der Schließstellung halten das Schließorgan und der Sitz im Kondensatableiter einen düsenartigen Durchlass offen, so dass der Kondensatableiter nach dem vorteilhaften Prinzip eines Düsen-Kondensatableiters funktioniert. Über den Durchlass wird entstehendes Kondensat permanent abgeführt, während der Dampfdruck weitgehend gehalten wird, was für die Effizienz des Sterilisierzyklus wichtig ist. In der Offenstellung gibt das Sitzventil einen großen Querschnitt frei, der dem Durchlass des Ablassventils entspricht, und im ersten Abführzustand den großen Durchsatz an Kondensat und Produktresten gestattet. Dabei werden der große Durchsatz wie auch der geringe Durchsatz über denselben Weg abgeführt, so dass ein übliches Umschaltventil mit der dazu benötigten Verrohrung entfällt, das nur den geringen Durchsatz in den Kondensatableiter, hingegen den großen Durchsatz unter Umgehung des Kondensatableiters in den Ablauf abführt. Der in Abführrichtung zunächst enge und sich anschließend erweiternde physikalisch als Diffusor wirkende Durchlass erzeugt durch das Verdampfen des überhitzten Kondensats und die Expansion des dadurch entstehenden Dampfes Gegendruck, welcher die Menge des durchtretenden Kondensats reguliert und somit den Dampfdruck auf der Sterilisationsseite nahezu konstant hält. Im System angestautes, kaltes Kondensat wird über den Durchlass beschleunigt abgeführt, da dieser ohne den Effekt der Wiederverdampfung wirkt. Der Platzbedarf für den Kondensatableiter bzw. zu dessen Installation am aseptischen Doppelsitzventil ist reduziert. Der Kondensatableiter besteht aus wenigen Teilen, und ist wegen nur weniger Teile kostengünstig und wartungsarm, da er im Betrieb selbstreinigend ist. Wird über das Sitzventil in der Offenstellung der große Durchsatz abgeführt, wird nämlich der dann exponierte Durchlass zuverlässig gereinigt, wodurch in der Schließstellung ein verstopfter Durchlass vermieden wird. Sollte der Durchlass im Sterilisationsbetrieb zum Verstopfen neigen, kann eine automatisierte Reinigung über eine Steuerung vorgenommen werden, indem das Schließorgan vorübergehend in die oder in Richtung zur Offenstellung verstellt wird, so dass Ablagerungen an den Teilen des Durchlasses weggespült werden. Der Kondensatableiter ist äußerst robust und unempfindlich. Es werden keine druckbeaufschlagten Dichtungen benötigt, da gegebenenfalls vorgesehene Schaftdichtungen am Betätiger nur einen nahezu drucklosen Rückraum abzudichten haben. Durch den einfachen Aufbau des Kondensatableiters ist seine Wartung problemlos jederzeit möglich.

Bei dem mit dem Kondensatableiter ausgestatteten aseptischen Doppelsitzventil wird bei einem Spülzyklus der große Durchsatz an Kondensat und Produktresten über denselben Weg im Kondensatableiter zum Ablauf geführt, wie der kleine Durchsatz an aus der Dampfbeaufschlagung resultierendem Kondensat, so dass ein an sich übliches Umschaltventil mit aufwändiger Verrohrung entfällt, und aufgrund einer wirksamen Selbstreinigung des Sitzventils im Kondensatableiter das aseptische Doppelsitzventil wartungsarm ist.

Bei einer zweckmäßigen Ausführungsform des Kondensatableiters haben die Dichtfläche und die Sitzfläche entweder gleiche Konus-Spitzenwinkel, oder hat die Dichtfläche eine sehr geringe Breite und wird über einen anschließenden kleineren Konus-Spitzenwinkel als Freifläche erweitert, wodurch sich zwischen Dichtfläche und Sitzfläche ein sich erweiternder Spalt bildet. Im ersten Fall entsteht in der Schließstellung ein großflächiger Kontaktbereich, in welchen entweder in der Sitz- oder der Dichtfläche oder in beiden die Kontur für den Durchlass eingebracht ist. Im zweiten Fall entsteht im Wesentlichen ein Linienkontakt, unterbrochen von der Kontur des Durchlasses. Der sich anschließend an die Engstelle erweiternde Bereich des Durchlasses wird hierbei durch die sich in einem spitzen Winkel öffnenden Dicht- und Sitzflächen gebildet.

Zweckmäßig erweitert sich der Sitz von der Zulaufseite in Abführrichtung zu einer zum Ablauf führenden Ventilkammer. Das Schließorgan ist an einem die Ventilkammer durchsetzenden Linear-Betätiger relativ zum Sitz in die Offenstellung in die Ventilkammer hinein und in die Schließstellung aus der Ventilkammer in den Sitz bringbar. Auf diese Weise ist der Durchflusswiderstand in der Offenstellung des Sitzventils außerordentlich gering, wie es für den großen Durchsatz wünschenswert ist. Hingegen wird das Schließorgan gegen die Strömung in Abführrichtung in die Schließstellung gebracht, wodurch sich der Weg bis auf den durchgängigen Durchlass feinfühlig abdrosseln lässt. Der Linearbetätiger wird z.B. pneumatisch, elektrisch oder elektromagnetisch angetrieben. Der Konus-Spitzenwinkel des Sitzes beträgt zwischen etwa 30° und 60°, vorzugsweise etwa 40°. Mit diesem Winkel kann bei großem Durchsatz die Strömung sich freizügig in die Ventilkammer expandieren.

Bei der Ausführungsform mit differierenden Konus-Spitzenwinkeln sollten diese um etwa 1° bis 10° verschieden sein. Mit dieser Winkeldifferenz erweitert sich der Durchlass in Abführrichtung ab der Engstelle.

Die axiale Länge der Dicht- und/oder Sitzfläche kann etwa 50 % des kleinsten Sitzdurchmessers entsprechen. Dadurch hat optimal große Länge, die im Hinblick auf gute Durchströmverhältnisse günstig sein kann.

Bei einer zweckmäßigen Ausführungsform mit differierenden Konus-Spitzenwinkeln. entsteht die Engstelle durch eine vorzugsweise zylindrische Ausfräsung im Bereich des Sitzes, welche sich fertigungstechnisch einfach herstellen und auch vermessen lässt. Die Ausfräsung erstreckt sich an der Zulaufseite mit über einen Teil der Höhe der Sitz- und Dichtflächen. Der sich ab der Engstelle erweiternde Bereich wird durch die Winkeldifferenz zwischen den Dicht- und Sitzflächen definiert.

Bei einer Ausführungsform mit gleichen Konus-Spitzenwinkeln erstreckt sich hingegen der Durchlass über die gesamte Höhe von Dichtfläche und/oder Sitzfläche, wobei er in Abführrichtung mit einem zylindrischen Abschnitt beginnt und sich dann konisch erweitert.

Auf eine Verjüngung am Einlass des Durchlasses kann bei beiden Ausführungsformen verzichtet werden, da die strömungstechnische Effizienz des Durchlasses nicht von Bedeutung ist.

Es ist durchaus möglich, in Umfangsrichtung mehrere Ausfräsungen vorzusehen.

In der Ausführungsform, in der Teile des Durchlasses sowohl in der Sitzfläche als auch in der Dichtfläche annähernd spiegelbildlich angeordnet sind, werden diese Teile in Umfangsrichtung als Paar aufeinander ausgerichtet. Hierfür kann das Schließorgan relativ zum Sitz verdrehgesichert sein.

In einer zweckmäßigen Ausführungsform ist der Linear-Betätiger eine zur Ventilkammer abgedichtet verschiebbare Kolbenstange eines gegen Federkraft mit Druckfluid beaufschlagbaren Kolbens. Dabei wirkt auf den Kolben, vorzugsweise, eine Federkraft in Verstellrichtung des Sitzventils zur Offenstellung, so dass das Sitzventil ohne Druckfluidbeaufschlagung des Kolbens die Offenstellung hält. Im Ruhezustand steht der Kondensatableiter sozusagen für den großen Durchsatz bereit. Die Schließstellung wird erst bei Einleiten eines Sterilisierzyklus beispielsweise mittels Druckluftbeaufschlagung eingestellt. Das Schließorgan könnte alternativ durch einen Linearantrieb in beiden Richtungen verstellt werden. Beim Spülzyklus mit großem Durchsatz werden die Teile des Durchlasses immer gespült und effizient gereinigt. Sollte es während eines Sterilisierzyklus in der Schließstellung zu einem Zulegen des Durchlasses kommen, kann dies durch einen Temperaturdetektor ermittelt werden, der z. B. die Temperatur an der Zulaufseite oder in einem Leckageraum des Doppelsitzventils oder in der Nähe des Kondensatableiters abgreift. In der Folge kann dann das Sitzventil zumindest noch einmal in die Offenstellung gestellt werden, so dass der zugelegte Durchlass durch angestautes und dann zügig und dynamisch abströmendes Kondensat gereinigt wird.

Bei dem aseptischen Doppelsitzventil ist es zweckmäßig, wenn eine Zulaufseite oder das Gehäuse und/oder der Abführweg zum Sitzventil des Kondensatableiters wenigstens einen installierten Temperaturdetektor aufweist, der als Temperaturmesseinheit die Temperaturverhältnisse in diesem Bereich abgreift, so dass dann das Sitzventil zwischen den Offen- und Schließstellungen auch temperaturabhängig umstellbar ist.

Eine Ausführungsform des aseptischen Doppelsitzventils weist im Gehäuse einen Leckageraum auf, an den zum Spülen mit Kondensat und zum Sterilisieren mit Dampf das Sperrventil und das Ablassventil angeschlossen sind. Aus dem Leckageraum werden etwaige Produktreste über den Kondensatableiter mit großem Durchsatz ausgespült, ehe nachfolgend ein Sterilisierzyklus mit Dampf ausgeführt wird, bei welchem das Sitzventil in der Schließstellung ist, entstehendes Kondensat jedoch mit geringem Durchsatz über den durchgängigen Durchlass abgeführt wird.

Im Sinne einer Gleichteilphilosophie, welche den Einsatz vieler Gleichteile und Dichtungen ermöglicht, können das Sperrventil, das Ablassventil und das Sitzventil des Kondensatableiters zumindest im Wesentlichen baugleich sein.

Das Konzept des Kondensatableiters ermöglicht es, diesen z.B. in einer Abfüllanlage an einem Doppelsitzventil entweder mit im Wesentlichen waagerechter Ventilachse zu verbauen, oder mit im Wesentlichen senkrechter Ventilachse, beispielsweise in Anpassung an den jeweils verfügbaren Bauraum.

Anhand der Zeichnungen werden Ausführungsformen des Erfindungsgegenstandes erläutert. Es zeigen:
Fig. 1 eine Seitenansicht eines mit einem Kondensatableiter ausgestatteten, aseptischen Doppelsitzventils, wobei der Kondensatableiter eine bestimmte Einbaulage einnimmt,
Fig. 2 eine Ansicht ähnlich der von Fig. 1 mit einer anderen Einbaulage des Kondensatableiters,
Fig. 3 einen Achsschnitt des Kondensatableiters der Fig. 1 und 2, in einer Schließstellung,
Fig. 4 ein vergrößertes Detail aus Fig. 3,
Fig. 5 eine perspektivische Detailansicht zu den Fig. 3 und 4,
Fig. 6 eine Ansicht ähnlich der von Fig. 4, jedoch einer Detailvariante,
Fig. 7 den Kondensatableiter der Fig. 3 bis 5 in einer Offenstellung,
Fig. 8 einen Achsschnitt einer weiteren Ausführungsform des Kondensatableiters, in der Schließstellung,
Fig. 9 einen vergrößerten Detailschnitt zu Fig. 8,
Fig. 10 eine Perspektivansicht zu dem Detail der Fig. 9, und
Fig. 11 eine vergrößerte Detailansicht ähnlich der von Fig. 8 und 9 einer Ausführungsvariante.

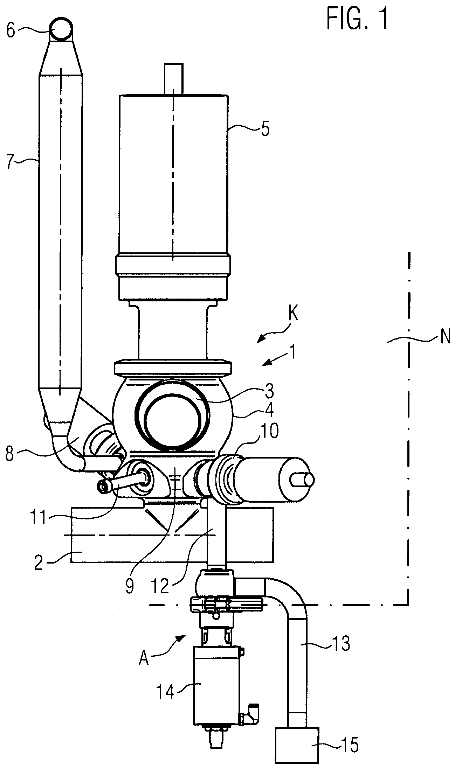

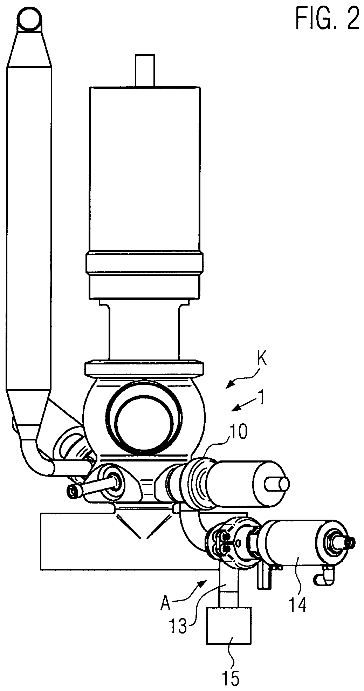

Die Fig. 1 und 2 zeigen als nicht beschränkendes Beispiel der Verwendung eines Kondensatableiters A einen sogenannten Produktknoten K, beispielsweise einer Abfüllanlage N für Getränke oder flüssige Lebensmittel in der Lebensmittel- oder Getränkeindustrie.

Der Produktknoten K weist ein aseptisches Doppelsitzventil 1 bekannter Bauart auf, das eine Verbindung zwischen Produktleitungen 2, 3 herstellt, oder die Produktleitungen voneinander trennt. Das Doppelsitzventil 1 weist ein Gehäuse 4 und eine Betätigungseinrichtung 5 auf. An das Gehäuse 4, in welchem zwischen nicht dargestellten Ventiltellern und Sitzen ein Leckageraum 9 vorgesehen ist, ist eine Dampfleitung 6 über eine Kondensatflasche 7 und ein Sperrventil 8 angeschlossen, um zumindest den Leckageraum 9 mit Kondensat aus der Kondensatflasche 7 von Produktresten zu reinigen, und anschließend mit Dampf zu sterilisieren.

An das Gehäuse 4 ist ferner ein Ablassventil 10 angeschlossen, von dem eine Verbindungsleitung 12 zum Kondensatableiter A führt, der über eine Leitung 13 an einen Pralltopf 15 angeschlossen sein kann. Am Kondensatableiter A ist eine hier beispielsweise pneumatische Betätigungseinrichtung 14 als Linear-Betätiger angebracht, ähnlich wie auch an dem Absperrventil und dem Ablassventil 8, 10. Entweder, wie gezeigt, ist am Gehäuse 4 ein Temperaturdetektor 11 verbaut, der die Temperatur beispielsweise im Leckageraum 9 abgreift, oder ist ein weiterer oder ein Temperaturdetektor (nicht gezeigt) im Strömungsweg zum oder im Kondensatableiter A vorgesehen.

Die Produktknoten K der Fig. 1 und 2 unterscheiden sich durch unterschiedliche Einbaulagen des Kondensatableiters A, beispielsweise im Hinblick auf verfügbaren Einbauraum. In Fig. 1 ist der Kondensatableiter in einer Abfüllanlage N vertikal verbaut, während er in Fig. 2 im Wesentlichen waagerecht verbaut ist.

Bei voneinander getrennten Produktleitungen 2, 3 und geöffnetem Absperrventil 8 und geöffnetem Ablassventil 10 ist der Kondensatableiter A in einer Offenstellung für einen ersten Abführzustand mit großem Durchsatz an Kondensat in Abführrichtung R z. B. aus der Kondensatflasche 7 und an Produktresten, oder in einer Schließstellung für einen zweiten Abführzustand mit geringem Durchsatz vorwiegend an Kondensat. Diese Abführzustände entsprechen einem Spülzyklus und einem Sterilisierzyklus, hier beispielsweise des Leckageraums 9. Beide Abführzustände nützen denselben Weg.

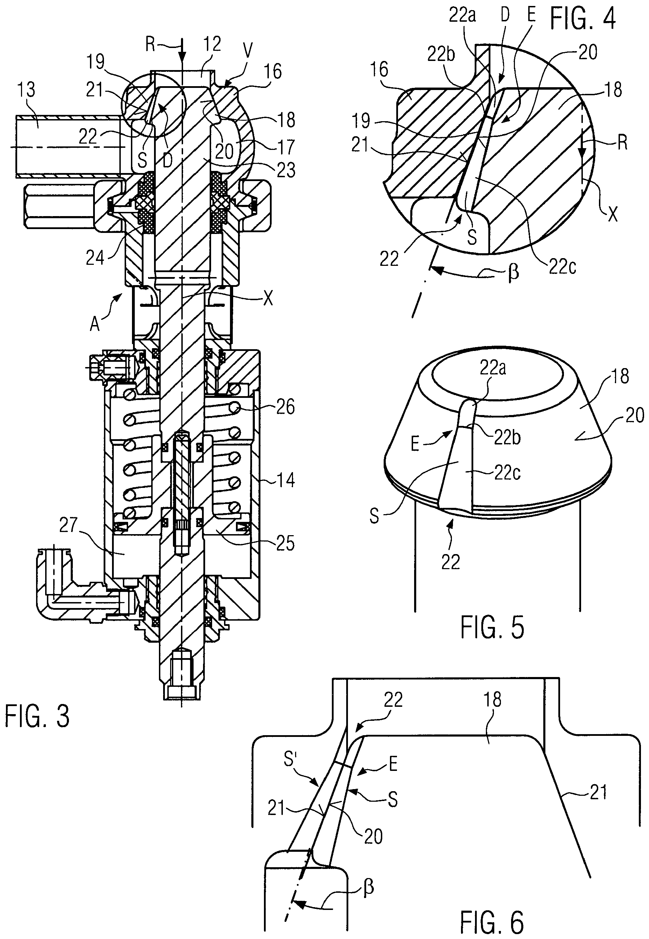

Die Fig. 3 bis 5 zeigen eine Ausführungsform des Kondensatableiters A, der sich in den Fig. 3 und 4 in der Schließstellung befindet.

Der Kondensatableiter A in Fig. 3 weist ein Gehäuse 16 auf, das eine Ventilkammer 17 begrenzt und einen Sitz 19 mit konischer Sitzfläche 21 für eine konische Dichtfläche 20 eines Schließorgans 18, d. h. ein Sitzventil V mit einer Ventilachse X, aufweist. Der Sitz 19 erweitert sich in Abführrichtung R zur Ventilkammer 17, die an die Leitung 13 angeschlossen ist. In der gezeigten Schließstellung taucht das Schließorgan 18 im Wesentlichen zur Gänze von unten her in den Sitz 19 ein, so dass die Dichtfläche 20 und die Sitzfläche 21 als ein Sitzventil den Durchgang durch den Sitz 19 dicht absperren würden. Jedoch bilden das Schließorgan 18 und der Sitz 19 in der Schließstellung mit wenigstens einer Steuerkerbe S einen zweiteiligen Durchlass D. In dieser Ausführungsform ist in der Dichtfläche 20 wenigstens eine lokale Steuerkerbe S, z. B. in Form einer Ausfräsung 22, eingebracht, die selbst in der Schließstellung einen gedrosselten Durchgang durch den Sitz 19 offenhält. Der Querschnitt des Durchlasses D verändert sich in Abführrichtung R, indem er zunächst nach einem anfänglichen Einlauf eine Engstelle E aufweist und sich nachfolgend in Abführrichtung R erweitert.

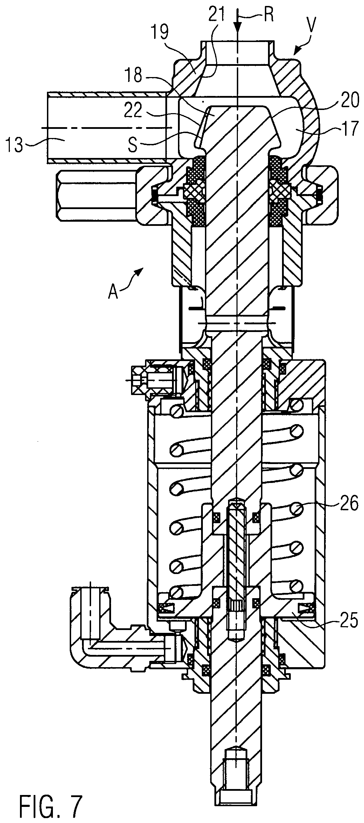

Das Schließorgan 18 ist sozusagen als Kopf an einem Linear-Betätiger 23 angeordnet, vorzugsweise mit diesem einstückig ausgebildet, der eine Kolbenstange eines in der Betätigungseinrichtung 14 verschiebbaren Kolbens 25 ist. Der Kolben 25 ist in einer Kammer 27 mit einem Druckfluid 27 beaufschlagbar, um die gezeigte Schließstellung einzustellen, und wird in der Gegenrichtung durch Federkraft einer Feder 26 beaufschlagt, die die Offenstellung des Sitzventils V einstellt (Fig. 7). Der Betätiger 23 ist mit einer Dichtung 24 gegenüber der Ventilkammer 17 abgedichtet.

In der vergrößerten Darstellung in Fig. 4 ist zu erkennen, dass die Ausfräsung 22 bzw. die Steuerkerbe S in der Dichtfläche 20 in Abführrichtung R in einem Anfangsabschnitt 22a zunächst zylindrisch verläuft, bis etwa zu einem Steuerkerbenende 22b an der Engstelle E, und sich anschließend in einem Endabschnitt 22c erweitert. Fig. 5 verdeutlicht die Abschnitte 22a, 22b, 22c der Ausfräsung 22, die die Steuerkerbe S in der Dichtfläche 20 des Schließorgans 18 definieren und mit der Sitzfläche 21 den zweiteiligen Durchlass D bilden. Die zylindrische Ausfräsung 22 hat eine Zylinderachse, die mit der konischen Sitzfläche 21 oder der konischen Sitzfläche 20 einen spitzen Winkel einschließt, sodass die Ausfräsung 22 in der Dichtfläche 20 oder Sitzfläche 21 konisch ist.

In der Ausführungsform der Fig. 3 und 4 haben die Sitzfläche 21 und die Dichtfläche 20 den gleichen Konus-Spitzenwinkel β, der zwischen etwa 30° und 60°, vorzugsweise etwa 40°, liegen kann.

In den gezeigten Ausführungsformen ist nur eine lokale Steuerkerbe S vorgesehen. Es ist möglich, über den Umfang, z. B. der Dichtfläche 20, verteilt mehr als eine Steuerkerbe S vorzusehen. Das Steuerkerbenende 22b ist an der Engstelle mit einer Linie dargestellt, kann jedoch zwischen den Abschnitten 22a, 22c gerundet werden. Die jeweilige Steuerkerbe könnte alternativ v-förmig oder eine Rechteck-Nut sein.

Alternativ könnte, wie in Fig. 6 angedeutet, die Steuerkerbe S' nur in der Sitzfläche 21 vorgesehen sein. Die Dichtfläche 20 wäre dann ohne Steuerkerbe S. Als weitere Alternative ist jedoch in Fig. 6 angedeutet, dass sowohl in der Sitzfläche 21 als auch in der Dichtfläche 20 jeweils eine Steuerkerbe S, S', vorgesehen ist, die in der Schließstellung die Engstelle E gemeinsam in etwa in der Mitte der Länge des Durchlasses D definieren. In diesem Fall werden die beiden annähernd spiegelbildlichen Steuerkerben S, S' in Umfangsrichtung aufeinander ausgerichtet. Z. B. ist für das Schließorgan 18 eine Verdrehsicherung vorgesehen.

Fig. 7 zeigt den Kondensatableiter A der Fig. 3 bis 5 in der Offenstellung, eingestellt beispielsweise durch die Feder 26, die den Kolben 25 auf Anschlag gefahren und das Schließorgan 18 aus dem Sitz 19 in die Kammer 17 zurückgezogen hat, so dass zwischen dem Sitz 19 und der Leitung 13 ein großer Querschnitt freigegeben ist, beispielsweise entsprechend dem Querschnitt des Ablassventils 10 in den Fig. 1 und 2.

Die Schließstellung in Fig. 3 entspricht einem zweiten Abführzustand für geringen Durchsatz, während die Offenstellung in Fig. 7 einem ersten Abführzustand für großen Durchsatz entspricht (Spülzyklus und Sterilisierzyklus).

In der Offenstellung in Fig. 7 entwickelt sich eine kräftige, sich in die Ventilkammer 17 und zur Leitung 13 expandierende Strömung, die eventuelle Verunreinigungen am Schließorgan 18, an der Sitzfläche 21 oder in der Steuerkerbe S wegspült.

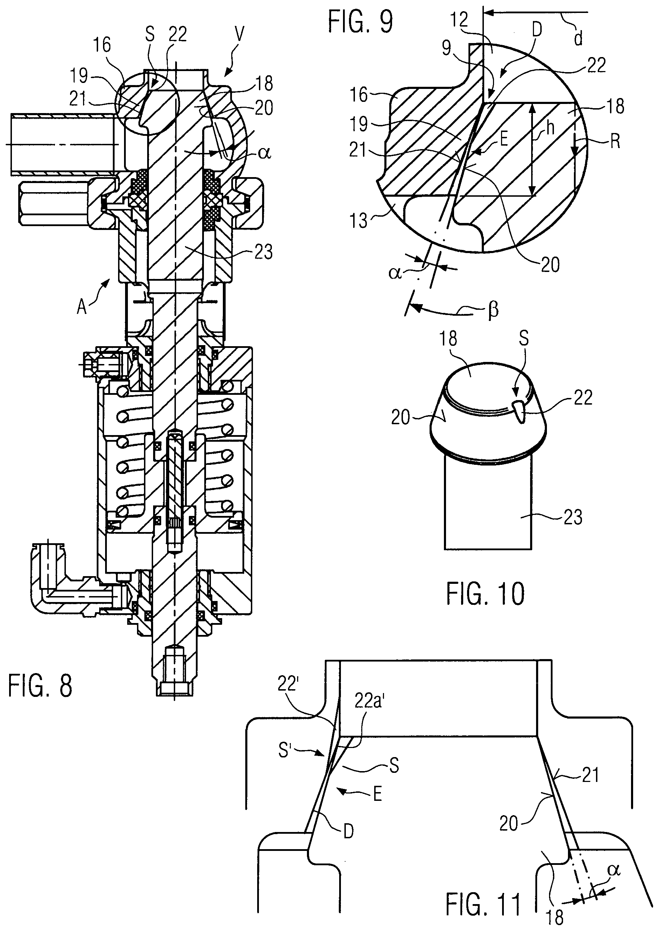

Die Fig. 8 mit 9 zeigen eine andere Ausführungsform des Kondensatableiters A in der Schließstellung, wobei sich diese Ausführungsform von der Ausführungsform der Fig. 3 bis 6 dadurch unterscheidet, dass die Sitzfläche 21 und die Dichtfläche 20 unterschiedliche Konus-Spitzenwinkel besitzen. Und zwar ist der Konus-Spitzenwinkel der konischen Dichtfläche 20 um eine Winkeldifferenz α kleiner als der Konus-Spitzenwinkel β der Sitzfläche 21. In der gezeigten Schließstellung in Fig. 8 und 9 würde das Schließorgan 8 mit einem schmalen Bereich der Dichtfläche 20 im Wesentlichen beim kleinsten Durchmesser des Sitzes 19 abdichten. Jedoch ist die mindestens eine Steuerkerbe S z. B. in der Dichtfläche 20 vorgesehen, beispielsweise die Ausfräsung 22, deren dann durchgängig gehaltener Querschnitt durch die Sitzfläche 21, die Dichtfläche 20 und die Steuerkerbe S begrenzt ist und sich in Abführrichtung R verändert.

Die axiale Länge h der Dichtfläche 20 bzw. der Sitzfläche 21 entspricht z. B. annähernd der Hälfte des kleinsten Sitzdurchmessers d. Der Differenzwinkel α zwischen den Konus-Spitzenwinkeln kann zwischen etwa 1° und 10° betragen. Die Steuerkerbe S erstreckt sich nur über einen kurzen Anfangsbereich der Länge h und nimmt in ihrer Weite und Tiefe in Abführrichtung R ab, bis sie schließlich in die Dichtfläche 20 einläuft, und zwar im Bereich der Engstelle E, an der durch den Differenzwinkel α die Sitzfläche 21 bereits von der Dichtfläche 20 zurückgewichen ist.

Fig. 10 zeigt in einer Perspektiv-Schemadarstellung des Schließorgans 18 die etwa zylindrische Ausfräsung 22 in der metallischen Dichtfläche 20. Die Steuerkerbe S könnte alternativ auch nur in der Sitzfläche 21 ausgebildet sein (nicht gezeigt).

Als weitere Alternative zeigt Fig. 11, dass der zweiteilige Durchlass D durch in Umfangsrichtung aufeinander ausgerichtete etwa spiegelbildliche Ausfräsungen 22a' und 22', d. h. zwei Steuerkerben S, S' in der Sitzfläche 21 und der Dichtfläche 20 definiert wird, und sich zunächst verjüngt, um sich anschließend an die Engstelle E wieder zu erweitern. Bei der Ausführungsform in Fig. 11 weist zweckmäßig das Schließorgan 18 eine Verdrehsicherung auf, so dass die Steuerkerben S, S' in Umfangsrichtung stets aufeinander ausgerichtet sind. Auch bei der Ausführungsform der Fig. 7 bis 10 könnten in Umfangsrichtung verteilt mehr als eine Steuerkerbe vorgesehen sein.

Die Funktion der zweiten Ausführungsform entspricht der der ersten Ausführungsform, d. h. es handelt sich um einen Kondensatableiter A, dessen Sitzventil V in der Schließstellung eine Düsenfunktion ausübt, und in der Offenstellung einen großen Querschnitt freigibt, wobei für beide Abführzustände (Spülzyklus, Sterilisierzyklus) derselbe Strömungsweg zum Ablauf 13 benutzt wird.

Der Kondensatableiter A besteht aus wenigen Bauteilen. Die Dichtung 24 wird von keinen hohen Drücken beaufschlagt, und ist kostengünstig und wartungsarm, weil das Sitzventil V selbstreinigend ist. Sollte sich jedoch im Sterilisierzyklus aufgrund von Produktresten oder anderen Verunreinigungen der Durchlass D zulegen , was zu einem Temperaturabfall beispielsweise im Leckageraum 9 führt, kann über eine übergeordnete Steuerung mit dem Meldesignal des Temperaturdetektors 11 der Temperatur-Messeinrichtung das Sitzventil V vorübergehend zur Offenstellung aufgesteuert werden, so dass der Durchlass D intensiv durchgespült und gereinigt wird.

Unter anderem wird durch Verwendung des vorbeschriebenen Kondensatableiters in dem Produktknoten A ein Umschaltventil mit seiner Verrohrung eingespart, wie es bei derartigen Produktknoten verwendet wird, um während des Spülzyklus den großen Durchsatz direkt abzuführen, und den Kondensatableiter A zu separieren, und Kondensat nur während des Sterilisierzyklus über den Kondensatableiter zu leiten.

Der Kondensatableiter A lässt sich problemlos in bestehende Verfahren oder Prozessanlagen einbinden, da er die gleiche Ansteuerung wie das bisher verwendete Umschaltventil benötigt, nämlich die Verstelleinrichtung 14.

Zur Reduzierung der Kosten und Vereinfachung der Ersatzteilvorhaltung können das Sperrventil 8, das Ablassventil 10 und das Sitzventil V mit seiner Betätigungseinrichtung 14 zumindest im Wesentlichen baugleich sein (Gleichteilphilosophie).

## Patentansprüche

1. Kondensatableiter (A), für Doppelsitzventile in Getränke- oder Lebensmittel-Abfüllanlagen, der zulaufseitig an wenigstens ein Ablassventil (10) eines Doppelsitzventils (1) und an einen Ablauf (13) anschließbar ist und ein Schließorgan (18) mit konischer Dichtfläche (20) und einen Sitz (19) mit konischer Sitzfläche (21) umfassendes Sitzventil (V) enthält, das zumindest zwischen einer Offenstellung für einen ersten Abführzustand mit großem Durchsatz und einer Schließstellung für einen zweiten Abführzustand mit geringem Durchsatz umstellbar ist, **dadurch gekennzeichnet, dass** das Schließorgan (18) und der Sitz (19) in der Schließstellung einen düsenartigen Durchlass (D)durchgängig halten, dessen Querschnitt in Abführrichtung (R) zunächst eine Engstelle (E) aufweist und sich anschließend vergrößert und der durch die Sitzfläche (21), die Dichtfläche (20) und wenigstens eine Steuerkerbe (S) in der Dichtfläche (20) und/oder der Sitzfläche (21) begrenzt ist.

2. Kondensatableiter nach Anspruch 1, **dadurch gekennzeichnet, dass** die Dichtfläche (20) und die Sitzfläche (21) entweder gleiche Konus-Spitzenwinkel (β) aufweisen, oder die Dichtfläche (20) einen kleineren vorzugsweise um etwa 1° bis 10° kleineren Konus-Spitzenwinkel (β-α), als die Sitzfläche (21) hat.

3. Kondensatableiter nach Anspruch 1, **dadurch gekennzeichnet, dass** der sich wieder erweiternde Durchlass-Querschnitt einen wesentlich größeren Durchtrittsweg als die Engstelle (E) definiert.

4. Kondensatableiter nach Anspruch 1, **dadurch gekennzeichnet, dass** sich der Sitz (19) in Abführrichtung (R) zu einer zum Ablauf (13) führenden Ventilkammer (17) erweitert, und dass das Schließorgan (18) an einem die Ventilkammer (17) durchsetzenden, vorzugsweise durch Druckluft, elektrisch oder magnetisch angetriebenen Linear-Betätiger (23) angeordnet und durch diesen in die Offenstellung aus dem Sitz (19) in die Ventilkammer (17) und in die Schließstellung aus der Ventilkammer (17) in den Sitz (19) bringbar ist.

5. Kondensatableiter nach Anspruch 1, **dadurch gekennzeichnet, dass** der Konus-Spitzenwinkel (β) des Sitzes (19) zwischen etwa 30° und 60°, vorzugsweise etwa 40° beträgt.

6. Kondensatableiter nach Anspruch 1, **dadurch gekennzeichnet, dass** die axiale Länge (h) der Dicht- und/oder der Sitzfläche (20, 21) etwa 50 % des kleinsten Sitzdurchmessers (d) entspricht.

7. Kondensatableiter nach Anspruch 2, **dadurch gekennzeichnet, dass** bei differierenden Konus-Spitzenwinkeln die Steuerkerbe (S) nach einem gegen die Abführrichtung (R) weisenden Anfangsabschnitt (22a) die Engstelle (E) aufweist, und dass sich der Anfangsabschnitt (22a) von der Zulaufseite in Abführrichtung (R) maximal über die halbe Länge (h) der Dicht- und/oder Sitzfläche (20, 21) erstreckt.

8. Kondensatableiter nach Anspruch 2, **dadurch gekennzeichnet, dass** bei gleichen KonusWinkeln (β) die Steuerkerbe (S) in Abführrichtung (R) über die Länge (h) der Dicht- und /oder Sitzfläche (20, 21) durchgeht, sich dabei bis zu einer Steuerkerbentaille (22b) an der Engstelle (E) verjüngt oder zylindrisch erstreckt und ab der Steuerkerbentaille (22b) wieder erweitert.

9. Kondensatableiter nach Anspruch 1, **dadurch gekennzeichnet, dass** in Umfangsrichtung verteilt mehrere, zweckmäßig gleichartige, Steuerkerben (S) vorgesehen sind.

10. Kondensatableiter nach wenigstens einem der Ansprüche 7 und 8, **dadurch gekennzeichnet, dass** die Steuerkerbe (S) wenigstens eine annähernd konische oder zylindrische Ausfräsung (22) in der metallischen Sitz- und/oder Dichtfläche (20, 21) aufweist.

11. Kondensatableiter nach Anspruch 1, **dadurch gekennzeichnet, dass** in der Dichtfläche (21) und der Sitzfläche (20) angeordnete annähernd spiegelbildliche Steuerkerben (S, S') in Umfangsrichtung aufeinander ausgerichtet sind, und dass vorzugsweise, das Schließorgan (18) relativ zum Sitz (19) verdrehgesichert ist.

12. Kondensatableiter nach Anspruch 3, **dadurch gekennzeichnet, dass** der Linear-Betätiger (23) eine zur Ventilkammer (17) abgedichtet verschiebbare Kolbenstange eines gegen Federkraft (26) mit Druckfluid beaufschlagbaren Kolbens (25) ist, und dass vorzugsweise die Federkraft (26) den Kolben (25) in Richtung zur Offenstellung des Sitzventils (V) vorspannt.

13. Aseptisches Doppelsitzventil (1), insbesondere in Getränke- oder Lebensmittel-Abfüllanlagen, mit einer an eine Dampfleitung (6) angeschlossenen Kondensatflasche (7), die über ein Sperrventil (8) an ein Gehäuse (4) des Doppelsitzventils (1) angeschlossen ist, einem an das Gehäuse (4) angeschlossenen Ablassventil (10), an das ein mit einem Ablauf (13) verbundener Kondensatableiter (A) angeschlossen ist, wobei im Gehäuse (4) ein Spülzyklus als erster Abführzustand und ein Sterilisierzyklus als zweiter Abführzustand mit Dampf bzw. Dampfkondensat durchführbar sind, **dadurch gekennzeichnet, dass** der Kondensatableiter (A) gemäß Anspruch 1 ausgebildet ist und beim Spülzyklus das Sitzventil (V) in die Offenstellung und beim Sterilisierzyklus in die durch den durchgängig gehaltenen Durchlass (D) definierte Schließstellung stellbar ist.

14. Aseptisches Doppelsitzventil nach Anspruch 13, **dadurch gekennzeichnet, dass** im Gehäuse (4) und/oder im Abführweg zum Sitzventil (V) des Kondensatableiters (A) wenigstens ein Temperaturdetektor (11) installiert ist, und dass das Sitzventil (V) zwischen den Offen- und Schließstellungen auch temperaturabhängig umstellbar ist.

15. Aseptisches Doppelsitzventil nach Anspruch 13, **dadurch gekennzeichnet, dass** das Doppelsitzventil (1) im Gehäuse (4) einen Leckageraum (9) enthält, an den zum Spülen und Sterilisieren das Sperrventil (8) und das Ablassventil (10) angeschlossen sind.

16. Aseptisches Doppelsitzventil nach Anspruch 13, **dadurch gekennzeichnet, dass** das Sperrventil (8), das Ablassventil (10) und das Sitzventil (V) des Kondensatableiters (A) zumindest im Wesentlichen baugleich sind, oder zumindest baugleiche Betätigungseinrichtungen (14) aufweisen.

17. Aseptisches Doppelsitzventil nach Anspruch 13, **dadurch gekennzeichnet, dass** der Kondensatableiter (A) mit im Wesentlichen waagerechter oder senkrechter Ventilachse (X) verbaut ist.

18. Verfahren zum Betreiben eines Kondensatableiters (A) nach Anspruch 1, **dadurch gekennzeichnet, dass** durch eine Temperaturmesseinheit (11) im Zulauf des Kondensatableiters (A) eine Sterilisationstemperatur gemessen wird, und dass mit unter einen Sollwert fallender Sterilisationstemperatur der Kondensatableiter (A) kurzzeitig in den ersten Abführzustand für großen Durchsatz gebracht wird.

19. Abfüllanlage (N) mit einem Doppelsitzventil (1) für Getränke oder flüssige Lebensmittel, **dadurch gekennzeichnet, dass** an dem Doppelsitzventil (1) ein Kondensatableiter (A) nach Anspruch 1 verbaut ist.

## Claims

1. A steam trap (A) for aseptic double seat valves in beverage or food filling plants, which, on the intake side, is connected to at least one drain valve (10) of the double seat valve (1) and to an outlet (13) and which includes a seat valve (V) comprising a closure element (18) with a conical sealing face (20) and a seat (19) with a conical seating area (21), said seat valve (V) being adapted to be switched at least between an open position for a first discharge state with large throughput and a closed position for a second discharge state with small throughput, **characterized in that,** at the closed position, the closure element (18) and the seat (19) keep open a nozzle-like passage (D), said passage having a cross-section, which, in the discharge direction (R), exhibits first a constriction (E) and enlarges after said constriction, and being delimited by the seating area (21), the sealing face (20) and at least one control groove (S) in the sealing face (20) and/or the seating area (21).

2. The steam trap according to claim 1, **characterized in that** the sealing face (20) and the seating area (21) have either identical cone top angles (β) or that the sealing face (20) has a cone top angle (β-α) that is smaller, preferably by approximately 1° to 10°, than that of the seating area (21).

3. The steam trap according to claim 1, **characterized in that** the re-enlarging passage cross-section defines a flow-through path which is substantially larger than the constriction (E).

4. The steam trap according to claim 1, **characterized in that,** in the discharge direction (R), the seat (19) enlarges thus forming a valve chamber (17) which leads to the outlet (13), and that the closure element (18) is arranged on a linear actuator (23), which extends through the valve chamber (17) and which is preferably driven pneumatically, electrically or magnetically, and is adapted to be moved by said linear actuator (23) to the open position out of the seat (19) into the valve chamber (17) and to the closed position from the valve chamber (17) into the seat (19).

5. The steam trap according to claim 1, **characterized in that** the cone top angle (β) of the seat (19) is an angle of approximately 30° to 60°, preferably an angle of approximately 40°.

6. The steam trap according to claim 1, **characterized in that** the axial length (h) of the sealing face (20) and/or the seating area (21) corresponds to approximately 50% of the smallest seat diameter (d).

7. The steam trap according to claim 2, **characterized in that,** in the case of differing cone top angles, the control groove (S) exhibits the constriction (E) after an initial portion which is (22a) directed in a direction opposite to the discharge direction (R), and that the initial portion (22a) extends from the intake side in the discharge direction (R) at most over half the length (*h*) of the sealing face (20) and/or the seating area (21).

8. The steam trap according to claim 2, **characterized in that,** in the case of identical cone angles (β), the control groove (S) extends, in the discharge direction (R), continuously over the length (h) of the sealing face (20) and/or seating area (21), narrows up to a control groove waist (22b) at the constriction (E) or extends cylindrically and re-enlarges from the control groove waist (22b) onwards.

9. The steam trap according to claim 1, **characterized in that,** distributed in the circumferential direction, a plurality of control grooves (S) is provided, which are expediently of an equal kind.

10. The steam trap according to at least one of the claims 7 and 8, **characterized in that** the control groove (S) is at least one approximately conical or cylindrical milled-out portion (22) in the metallic sealing face (20) and/or seating area (21).

11. The steam trap according to claim 1, **characterized in that** approximately mirror-inverted control grooves (S, S') arranged in the sealing face (20) and in the seating area (21) are oriented relative to one another in the circumferential direction, and that preferably the closure element (18) is protected against rotation relative to the seat (19).

12. The steam trap according to claim 3, **characterized in that** the linear actuator (23) is a piston rod of a piston (25), which is adapted to be acted upon by pressurized fluid against the force of a spring (26), said piston rod being displaceable such that it is sealed off from the valve chamber (17), and that preferably the spring force (26) biases the piston (25) towards the open position of the seat valve (V).

13. An aseptic double seat valve (1), in particular in beverage or food filling plants, comprising a condensate bottle (7), which is connected to a steam pipe (6) and, via a check valve (8), to a housing (4) of the double seat valve (1), and a drain valve (10) connected to the housing (4) and having connected thereto a steam trap (A) that communicates with an outlet (13), wherein a flushing cycle is executable in the housing (4) as a first discharge state and a sterilization cycle is executable with steam or steam condensate in the housing (4) as a second discharge state, **characterized in that** the steam trap (A) is configured according to claim 1 and that, during the flushing cycle, the seat valve (V) is adjustable to the open position and, during the sterilization cycle, to the closed position defined by the kept-open passage (D).

14. The aseptic double seat valve according to claim 13, **characterized in that,** in the housing (4) and/or in the discharge path to the seat valve (V) of the steam trap (A), at least one temperature detector (11) is installed, and that the seat valve (V) can also be switched in a temperature-dependent manner between the open and closed positions.

15. The aseptic double seat valve according to claim 13, **characterized in that** the double seat valve (1) comprises in the housing (4) a leakage chamber (9), which has connected thereto the check valve (8) and the drain valve (10) for the purpose of flushing and sterilizing.

16. The aseptic double seat valve according to claim 13, **characterized in that** the check valve (8), the drain valve (10) and the seat valve (V) of the steam trap (A) are, at least substantially, equal in construction or comprise at least actuating units (14) that are equal in construction.

17. The aseptic double seat valve according to claim 13, **characterized in that** the steam trap (A) is installed such that the valve axis (X) extends substantially horizontally or vertically.

18. A method of operating a steam trap (A) according to claim 1, **characterized in that,** by means of a temperature measurement unit (11) in the inlet of the steam trap (A), the sterilization temperature is measured and that, if the temperature drops below a given value, the steam trap (A) is transferred, for a short period of time, to the first discharge state for large throughput.

19. A filling plant (N) comprising a double seat valve (1) for beverages or liquid food, **characterized in that** a steam trap (A) according to claim 1 is installed at the double seat valve (1).

## Revendications

1. Séparateur-évacuateur de condensats (A) pour soupapes à siège double dans des installations de soutirage-remplissage de boissons ou de produits alimentaires, pouvant être raccordé, côté entrée, à au moins une soupape d'évacuation (10) d'une soupape à siège double (1) et à un écoulement d'évacuation (13), et renfermant une soupape à siège (V) avec un organe d'obturation (18) à surface d'étanchéité (20) conique et un siège (19) à surface de siège (21) conique, qui peut être commutée entre une position d'ouverture pour un premier état d'évacuation à grand débit et une position de fermeture pour un deuxième état d'évacuation à faible débit,
**caractérisé en ce que** l'organe d'obturation (18) et le siège (19), dans la position de fermeture, maintiennent passant un passage (D) en forme de buse, dont la section transversale, dans la direction d'évacuation (R), présente tout d'abord une zone étroite (E) et s'agrandit ensuite, et qui est délimité par la surface de siège (21), la surface d'étanchéité (20) et au moins une entaille de commande (S) dans la surface d'étanchéité (20) et/ou la surface de siège (21).

2. Séparateur-évacuateur de condensats selon la revendication 1, **caractérisé en ce que** soit la surface d'étanchéité (20) et la surface de siège (21) présentent le même angle de sommet de cône (β), soit la surface d'étanchéité (20) possède un angle de sommet de cône (β-α) plus petit, de préférence plus petit d'environ 1° à 10°, que la surface de siège (21).

3. Séparateur-évacuateur de condensats selon la revendication 1, **caractérisé en ce que** la section transversale de passage, qui s'évase à nouveau, définit un chemin de passage sensiblement plus grand que la zone étroite (E).

4. Séparateur-évacuateur de condensats selon la revendication 1, **caractérisé en ce que** le siège (19) s'évase dans la direction d'évacuation (R), en direction d'une chambre de soupape (17) menant à l'écoulement d'évacuation (13), et **en ce que** l'organe d'obturation (18) est agencé sur un actionneur linéaire (23), qui traverse la chambre de soupape (17) et est entrainé de préférence de manière pneumatique, électrique ou magnétique, et par lequel l'organe d'obturation peut être amené, à partir du siège (19) vers la chambre de soupape (17), à la position d'ouverture, et à partir de la chambre de soupape (17) vers le siège (19), à la position de fermeture.

5. Séparateur-évacuateur de condensats selon la revendication 1, **caractérisé en ce que** l'angle de sommet de cône (β) du siège (19) présente une valeur environ entre 30° et 60°, de préférence d'environ 40°.

6. Séparateur-évacuateur de condensats selon la revendication 1, **caractérisé en ce que** la longueur axiale (h) de la surface d'étanchéité et/ou de siège (20, 21) correspond environ à 50% du plus petit diamètre de siège (d) .

7. Séparateur-évacuateur de condensats selon la revendication 2, **caractérisé en ce que** dans le cas d'angles de sommet de cône, qui diffèrent, l'entaille de commande (S) présente, après un tronçon de départ (22a) orienté à l'encontre de la direction d'évacuation (R), la zone étroite (E), et **en ce que** le tronçon de départ (22a) s'étend à partir du côté d'entrée, dans la direction d'évacuation (R), au maximum sur la moitié de la longueur (h) de la surface d'étanchéité et/ou de siège (20, 21).

8. Séparateur-évacuateur de condensats selon la revendication 2, **caractérisé en ce que** dans le cas d'angles de sommet de cône (β) identiques, l'entaille de commande (S) s'étend dans la direction d'évacuation (R), de manière continue sur la longueur (h) de la surface d'étanchéité et/ou de siège (20, 21), en se rétrécissant ou en s'étendant ici de manière cylindrique jusqu'à une taille d'entaille de commande (22b) au niveau de la zone étroite (E), et en s'élargissant à nouveau à partir de la taille d'entaille de commande (22b).

9. Séparateur-évacuateur de condensats selon la revendication 1, **caractérisé en ce que** plusieurs entailles de commande (S), avantageusement de même type, sont prévues de manière réparties dans la direction périphérique.

10. Séparateur-évacuateur de condensats selon l'une au moins des revendications 7 et 8, **caractérisé en ce que** l'entaille de commande (S) comprend au moins une fraisure (22) approximativement conique ou cylindrique dans la surface d'étanchéité et/ou de siège (20, 21) métallique.

11. Séparateur-évacuateur de condensats selon la revendication 1, **caractérisé en ce que** des entailles de commande (S, S') agencées dans la surface d'étanchéité (21) et dans la surface de siège (20) sensiblement de manière symétrique inverse, sont orientées, dans la direction périphérique, de manière à être mutuellement en regard, et **en ce que** l'organe d'obturation (18) est de préférence arrêté en rotation par rapport au siège (19).

12. Séparateur-évacuateur de condensats selon la revendication 3, **caractérisé en ce que** l'actionneur linéaire (23) est constitué par une tige de piston coulissant de manière étanche par rapport à la chambre de soupape (17) et faisant partie d'un piston (25) pouvant être sollicité par un fluide de pression à l'encontre d'une force de ressort (26), et **en ce que**, de préférence, la force de ressort (26) assure une précontrainte du piston (25) en direction de la position d'ouverture de la soupape à siège (V).

13. Soupape à siège double (1) aseptique, notamment dans des installations de soutirage-remplissage de boissons ou de produits alimentaires, comprenant une bouteille de condensats (7) raccordée à une conduite de vapeur (6) et raccordée, par l'intermédiaire d'une vanne d'arrêt (8), à un corps (4) de la soupape à siège double (1), et comprenant également une soupape d'évacuation (10) raccordée au corps (4) et à laquelle est raccordé un séparateur-évacuateur de condensats (A) relié à un écoulement d'évacuation (13), un cycle de rinçage en tant que premier état d'évacuation et un cycle de stérilisation en tant que deuxième état d'évacuation avec de la vapeur ou des condensats de vapeur, pouvant être effectués dans le corps (4), **caractérisée en ce que** le séparateur-évacuateur de condensats (A) est d'une configuration selon la revendication 1, et lors du cycle de rinçage, la soupape à siège (V) peut être amenée dans la position d'ouverture et, lors du cycle de stérilisation, dans la position de fermeture définie par le passage (D) maintenu passant.

14. Soupape à siège double aseptique selon la revendication 13, **caractérisée en ce que** dans le corps (4) et/ou dans le chemin d'évacuation vers la soupape à siège (V) du séparateur-évacuateur de condensats (A), est installé au moins un détecteur de température (11), et **en ce que** la soupape à siège (V) peut également être commutée entre les positions d'ouverture et de fermeture en fonction de la température.

15. Soupape à siège double aseptique selon la revendication 13, **caractérisée en ce que** la soupape à siège double (1) renferme dans le corps (4), une chambre de fuites (9), à laquelle sont raccordées, pour le rinçage et la stérilisation, la soupape d'arrêt (8) et la soupape d'évacuation (10).

16. Soupape à siège double aseptique selon la revendication 13, **caractérisée en ce que** la vanne d'arrêt (8), la soupape d'évacuation (10) et la soupape à siège (V) du séparateur-évacuateur de condensats (A), sont au moins sensiblement de même construction, ou présentent au moins des dispositifs d'actionnement (14) de même construction.

17. Soupape à siège double aseptique selon la revendication 13, **caractérisée en ce que** le séparateur-évacuateur de condensats (A) est implanté avec un axe de soupape (X) sensiblement horizontal ou vertical.

18. Procédé pour assurer le fonctionnement d'un séparateur-évacuateur de condensats (A) selon la revendication 1, **caractérisé en ce que** l'on mesure une température de stérilisation à l'aide d'une unité de mesure de température (11) dans l'entrée du séparateur-évacuateur de condensats (A), et **en ce que** dans le cas d'une température de stérilisation chutant en-dessous d'une valeur de consigne, on amène le séparateur-évacuateur de condensats (A) brièvement dans la première position d'évacuation pour un débit élevé.

19. Installation de soutirage-remplissage (N) comprenant une soupape à siège double (1) pour des boissons ou des produits alimentaires liquides, **caractérisée en ce que** sur la soupape à siège double (1) est implanté un séparateur-évacuateur de condensats (A) selon la revendication 1.
